(19) **Europäisches Patentamt / European Patent Office / Office européen des brevets**

(11) **EP 2 573 516 B1**

(12) **EUROPEAN PATENT SPECIFICATION**

(45) Date of publication and mention
of the grant of the patent:
**20.11.2013 Bulletin 2013/47**

(51) Int Cl.:
***G01C 19/5712*** *(2012.01)*

(21) Application number: **11290426.3**

(22) Date of filing: **21.09.2011**

(54) **A micro-electromechanical gyro device**

Eine mikroelektromechanische Gyroskop-Vorrichtung

Un gyroscope micro-electromécanique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.03.2013 Bulletin 2013/13**

(73) Proprietor: **Tronics Microsystems S.A.**
**38926 Crolles (FR)**

(72) Inventor: **Leclerc, Jacques**
**26000 Valence (FR)**

(74) Representative: **Roshardt, Werner Alfred et al**
**Keller & Partner**
**Patentanwälte AG Winterthur**
**Bahnhofplatz 18**
**Postfach 2005**
**8401 Winterthur (CH)**

(56) References cited:
**US-A1- 2004 211 257**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

**Technical Field**

The invention relates to a method for detecting an output signal of a resonator micro-electronic gyro preferably of a micro-electromechanical system (MEMS) gyro comprising the steps of:

a) activating a vibrational in-plane movement of a first and a second resonator mass suspended for rotational vibration, and

b) providing an anti-phase vibration of the first and second vibrating mass by at least one mechanical coupling element flexibly connecting the first and the second resonator mass for anti-phase vibration.

The invention also relates to a resonator micro-electronic gyro comprising:

a) a first and a second resonator mass suspended for rotational vibration,

b) at least one mechanical coupling element flexibly connecting the first and the second resonator mass for anti-phase vibration,

c) at least one positive and at least one negative sensing electrode on each resonator mass for detecting an out-of-plane output movement of the masses,

d) a detection circuit connected to said positive and negative sensing electrodes.

The term "gyro" is meant to be a general term that includes a gyroscope, that measures angles, as well as a rotation rate gyro, that measures angular rates.

**Background, prior art**

There is a wide range of MEMS devices for detecting angular rates e.g. US 5,329,815 (Motorola), US 5,025,346 (Univ. of California), EP 0 623 807 (GM) and US 5,377,544 (Motorola).
US 7,624,494 (Challoner et al.) discloses an inertial sensor that includes a mesoscaled disc resonator comprised of a micro-machined wafer with low coefficient of thermal expansion for sensing substantially in-plane vibration. A rigid support is coupled to the resonator at a central mounting point of the resonator by radial suspension beams. An excitation electrode is within an interior of the resonator to excite internal in-plane vibration of the resonator. At least one sensing electrode within the interior of the resonator is used for sensing the internal in-plane vibration of the resonator.
US 6,062,082 (Guenther et al.) discloses a Coriolis rotation rate sensor, having a swinging structure that is movably suspended on a substrate (base) and can be deflected due to an acceleration effect. The sensor further has an arrangement for generating a planar rotational swinging movement of the swinging structure. An evaluating arrangement is provided for detecting a deflection of the swinging structure that is stipulated by Coriolis acceleration. The swinging structure is suspended so as to perform a planar rotational swinging movement. The problem of this structure is that there is a net reaction force acting on the base plate during the swinging of the mobile mass.
US 6,629,460 (Challoner) discloses a resonator gyroscope comprising a resonator including two bodies, each with a center of mass and transverse inertia symmetry about an axis that are substantially coincident and each supported by one or more elastic elements. The bodies together form two differential rocking modes of vibration transverse to the axis with substantially equal frequencies. The two bodies transfer substantially no net momentum to the base plate when the resonator is excited. The gyro further includes a base plate affixed to the resonator by the one or more elastic elements.
US 2004/0211257 (Analog Devices) discloses a multi-sensor consisting of two coupled masses vibrating in anti-phase. The circular masses are anchored to and suspended over a substrate by a plurality of flexures (not shown). The multi-sensor further comprises a fork member coupling the two circular masses to allow relative anti-phase movement, and to resist in phase movement. The multi-sensor includes circuitry configured to sense changes in the capacitance values, and to provide electrically independent acceleration sense signals that include information pertaining to angular rate sensing and acceleration sensing relative to the rotation axes X,Y and the acceleration axis Z, respectively. Because the circular masses vibrate in anti-phase, the Coriolis acceleration is imposed on the respective masses in opposite directions.
The prior art is not satisfactory with respect to suppressing measurement disturbances. There is a need for lower environmental influences on the measurements to provide better sensitivity of the device.

## EP 2 573 516 B1

### Summary of the invention

It is an object of the invention to provide a micro-electromechanical system (MEMS) device for detecting rotation which has a low sensitivity to thermo-mechanical effects and to disturbing linear accelerations.

According to the invention, the above mentioned objectives are achieved by a method comprising the following steps:

a) activating a vibrational in-plane movement of a first and a second resonator mass by activating means, wherein the resonator masses are suspended for rotational vibration,

b) providing an anti-phase vibration of the first and second resonator mass by at least one mechanical coupling element flexibly connecting the first and the second resonator mass for anti-phase vibration,

c) detecting at least two positive sensing electrode signals {S21+}, {S11+} and at least two negative sensing electrode signals {S21-}, {S11-} of at least two positive and two negative sensing electrodes of the two resonator masses, respectively, for detecting an out-of-plane output movement of the masses,

d) determining at least one output signal $Sx_{out}$ by differential detection of said signals on the basis of the following formula:

$$Sx_{out} = (\{S21+\} - \mu\{S11+\}) - (\{S21-\} - \mu\{S11-\}),$$

wherein

{S21+}, {S21-} =  sensing electrode signals of the positive and negative detection electrode of the second mass, respectively;

{S11+}, {S11-} =  sensing electrode signals of the positive and negative detection electrode of the first mass, respectively,

$\mu$ =  compensation factor.

wherein the second mass has the shape of a ring and the first mass is concentrically suspended within the second mass.

The differential detection of the invention avoids (or at least minimizes) the distorting effects of environmental influences and acceleration forces in z-direction. By means of the compensation factor $\mu$ it is possible to account for a difference in sensitivity of the two masses at a given level of rotation to be measured. The difference in sensitivity may result from different diameters (i.e. radial distance from the axis of vibration) of the two masses. If no compensation is necessary, the compensation factor is $\mu$ = 1. If compensation is required, the compensation factor is different from 1. Typically, the compensation factor is in the range of 0.2 - 5 and more preferably in the range of 0.5 - 2.

It is an advantage of the invention that it may be implemented with a technology that is well established. In particular, the parts and circuits for generating and treating the electrical signals, e.g.

• the circuits for activating the vibrational movement of the masses,

• the circuits for detecting a sensing electrode signal and

• further electrical requirements, references and converters

may be similar to those used for conventional MEMS-gyros.

Two output signals:

While it is possible to use the invention for just one single output signal, it is preferable to detect rotation in the two axes x and y parallel to the plane of vibration of the masses. This means that two output signals $Sx_{out}$, $Sy_{out}$ are determined. In detail, there are additional steps namely:

a) detecting two additional positive sensing electrode signals {S22+}, {S12+} and at least two additional negative sensing electrode signals {S22-}, {S12-} of at least two additional positive and two negative sensing electrodes of the said two resonator masses, respectively, for detecting an additional out-of-plane output movement of the masses,

b) determining an additional output signal $Sy_{out}$ by differential detection of said additional signals on the basis of the following formula:

$$Sy_{out} = (\{S22+\} - \mu\{S12+\}) - (\{S22-\} - \mu\{S12-\}),$$

wherein

{S22+}, {S22-} =      sensing electrode signals of the positive and negative detection electrode of the second mass, respectively;

{S12+}, {S12-} =      sensing electrode signals of the positive and negative detection electrode of the first mass, respectively,

$\mu$ =      compensation factor.

The compensation factor $\mu$ is the same for both output signals.

Ring-shaped coupling element:

The method of claim 1 or 2, wherein the coupling element is provided in the form of a ring-shaped elastic structure with radial beams connecting the ring-shaped structure to the two masses. Alternatively, other designs can be used such as Z-shaped or S-shaped spring elements.

A resonator micro-electronic gyro, preferably a micro-electromechanical system (MEMS) gyro using the method of the invention comprises:

a) a first and a second resonator mass suspended for rotational in-plane vibration; and activating means for activating a vibrational in-plane movement of the first and the second resonator mass;
b) at least one mechanical coupling element flexibly connecting the first and the second resonator mass for anti-phase vibration;
c) at least one positive and at least one negative sensing electrode on each resonator mass for detecting an out-of-plane movement of the masses;
d) a detection circuit connected to said positive and negative sensing electrodes, and
e) a calculator implemented in the detection circuit, said calculator determining the output signal by differential detection of the signals on the basis of the formula mentioned earlier:

$$Sx_{out} = (S21_+ - \mu\, S11_+) - (S21_- - \mu\, S11_-),$$

wherein the second mass has the shape of a ring and the first mass is concentrically suspended within the second mass.

It is to be noted that the term "calculator" is not to be understood in a limited way. A calculator according to the invention may be a general purpose calculator device as well as an application specific electronic circuit that is capable of doing the required differentiation of the signals.

According to a preferred embodiment, the device for determining two output signals $Sx_{out}$, $Sy_{out}$ has

a) at least one additional positive and at least one additional negative sensing electrode on each resonator mass for detecting an additional out-of-plane output movement of the masses,

b) wherein said additional positive and negative sensing electrodes are connected to the same detection circuit as the first sensing electrodes, and wherein

c) the calculator in the detection circuit also determines the additional output signal by differential detection of the signals on the basis of the following formula (already mentioned above):

$$Sy_{out} = (\{S22+\} - \mu\{S12+\}) - (\{S22-\} - \mu\{S12-\})$$

Ring-shaped outer mass:

According to the invention the second mass has the shape of a ring and the first mass is concentrically suspended within the second mass. The ring is a closed body with a central opening for the second mass. Both masses perform a rotational vibration about a common geometric axis. The direction of the vibration axis is in z-direction and is defined orthogonal to the plane in which the movement of vibration takes place.

Most preferably, the ring has a rotationally symmetric shape. Typically the shape is that of a circular ring-plate. But it is also possible to use a ring having polygonal (e.g. octagonal or square) shape, which requires more area on the substrate. Instead of providing a closed ring, it is also possible to design the second mass in a more complex shape (having e.g. several separated ring segments).

Circular shape of first mass:

The first mass, which is suspended within the second mass, has preferably the shape of a circular disk (disk-shape). When both masses are circular (disk or ring) the surface area needed on the substrate is minimal and the symmetry within the plane of vibration is optimal. This embodiment is best when two output signals $Sx_{out}$ and $Sy_{out}$ are to be determined However, the inner mass may also have the shape of a ring plate.

Coupling element:

Preferably, the coupling element (or each of the two or more coupling elements) is fixed on an anchor and is suspending the two masses. Therefore, the coupling element is also the suspension element for each of the masses. Coupling elements and suspension elements may also be embodied by two different mechanical structures.

In general, for reasons of symmetry, each mass is suspended on at least two suspension elements. Preferably, there are four suspension elements for each mass. The suspension elements are flexible and allow a rotational vibration of the mass within the x-y-plane (plane parallel to the substrate of the device). They are also resilient to allow for an out-of-plane swinging of the mass (depending on the exerted Coriolis force).

The mechanical coupling element is designed so as to allow anti-phase vibration of the masses. In-phase vibrations should be damped or suppressed by the coupling element. This is achieved e.g. by beam that is stiffly connected at each of its ends to each one of the two masses and that is attached at its centre (or generally speaking: in its middle part) to an anchor post of the substrate in such a way that an in-plane bending force (exerted by the vibrating inner mass on the coupling element) can be transmitted or propagated across the anchor from one end of the beam to its other end (to the outer mass).

Anchor:

Preferably, each of said anchors is arranged in a free space between the two masses and is supporting the coupling element in a middle area. When several (e.g. four) separate coupling elements are used, this means that there may be one single anchor point for each coupling beam. The anchor points of the different anchors may be arranged on a circle at equal angular distance from each other. It is also possible to have two separate anchor points for each of the coupling elements.

Shape of coupling element:

There is a variety of designs that may be used for implementing the coupling elements. When the distance between the two masses is sufficiently large for providing the required resilience of the elements, the coupling elements may be straight beams. Preferably, the coupling element is curved. It may then have an Z- or S-shape. However, it may also have a more complicated shape. The coupling element may also have a central part that is straight and two end parts that have the shape of a fork, the two prongs of the fork being connected to the mass (Y-shape).

According to a further variant, the coupling element has the form of a ring-shaped elastic structure with radial beams connecting the ring-shaped structure with the two masses. Therefore, there is just one (complex) coupling element instead of several individual coupling elements. This has the advantage that the anti-phase vibration mode of the masses is strongly supported and other in-plane vibration modes are suppressed.

The radial beams may be straight or curved. They may also have a fork-shape, the prongs of the fork being connected to one of the masses.

The ring-shaped elastic structure may be fixed to at least three, preferably four, anchor posts. In between the anchor posts the ring can deflect from its circular shape when the masses vibrate. The ring-shaped structure is connected to the two masses e.g. by radially extending beams (with respect to the centre of the ring). The connection points of the beams to the ring-shaped elastic structure are angularly displaced with respect to the anchor points of the ring-shaped structure. The connection points may be in the middle between two neighbouring anchor points.

Electrodes:

When viewed from the centre of the masses the positive sensing electrodes of the two masses are in the same sector (e.g. in the same quarter). In an analogous way the negative sensing electrodes of the masses are in a common sector (e.g. in a quarter displaced with respect to the quarter of the positive sensing electrodes). The sensing electrodes in each case define a capacity that varies depending on the out-of-plane movement of the masses. One electrode layer is arranged on the main surface of the vibrating mass and the other electrode layer may be on a fixed element above and face to face to the moving electrode.

There may be four pairs of sensing electrode layers for each of the two masses (2 positive and 2 negative sensing electrodes). However, there may be less (when detecting just one Coriolis rotation axis) or more (e.g. 6) electrode pairs.

Geometry of mobile mass:

The geometry of the mobile mass is selected in such a way that the actuated vibration frequency of the inner and the outer mass is the same. When a certain Coriolis acceleration is exerted on the two vibrating masses, they will usually react with different out-of-plane amplitudes. (Note that an angular rate generates a Coriolis acceleration.) It is advantageous to take measures so that the amplitudes are not too much different.

One preferred measure is to construct the suspending elements of the inner mass differently from those of the outer mass so that the inner mass has substantially the same output amplitude as the outer mass.

Another measure is to suspend the inner mass in such a way that it has a higher in-plane vibration amplitude than the outer mass so that in the end the out-of-plane swinging amplitude of the two masses is of the same (or at least similar) magnitude.

Activating means:

The vibration of the mobile masses is generated by activating electrodes. They may have a comb-like structure. The fingers of the comb may be oriented parallel to the direction of movement. Such electrode structures are known in the prior art. For instance, circumferentially oriented activation electrodes of the invention may have a structure as shown in Figs. 5, 6, 10 of US 5,025,346 (Univ. of California). If there is a circular disk-shaped inner mass within a circular ring-shaped outer mass the activating electrodes are preferably arranged in the radial space between the two masses. It is also possible to arrange the activating electrodes of the outer mass at the outer periphery of the outer mass. Further more, if the mass is not a closed ring, the activation electrodes may also be arranged in the radial range of the mass, i.e. in the ring area that is to some extent covered by the mobile mass. The prior art cited at the beginning of the specification shows different embodiments for activation electrodes. Such structures may also be used for the invention.

It is to be noted that due to the different radial extension of the inner and the outer mass the tangential velocities at the periphery of masses are different and, as a consequence, the Coriolis accelerations are different. For compensating this difference a different gain is introduced between the sensing electrodes of the outer and the inner mass. Alternatively, the activation control may be made such that the amplitudes of the vibrations of the masses are different so that the tangential velocity is the same.

The geometry of the mobile mass is selected in such a way that the actuated vibration frequency of the inner mass and the outer mass is identical.

**Brief description of the drawings**

The accompanying drawings further illustrate the invention and serve to explain the preferred embodiments in combination with the detailed specification:

Fig. 1    a schematic top plan view of a device with two concentric mobile masses arranged one in the other;

Fig. 2    a schematic cross-section of the device of Fig. 1 when a Coriolis acceleration is exerted;

Fig. 3    a schematic cross-section of the device of Fig. 1 when a linear z-axis acceleration is exerted;

Fig. 4    a schematic top plan view of a coupling structure;

Fig. 5    a schematic diagram of a control and detection circuit.

Generally speaking, like reference numerals refer to identical parts.

**Preferred Embodiments**

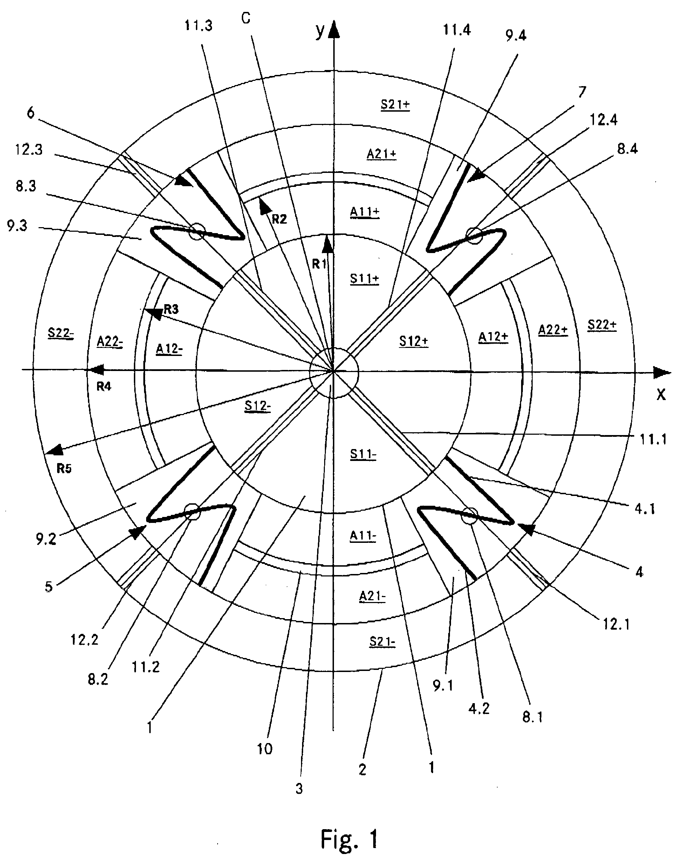

Fig. 1 illustrates a preferred embodiment of the invention. There is a first mobile mass 1 and a second mobile mass 2. The first mass 1 is substantially a circular disk. In the present embodiment the disk has an opening 3 in the center. The radius R1 of the circular disk may be in the range of 0.1 mm to 3 mm. The second mass 2 is ring-shaped and surrounds the first mass 1. The inner radius R4 of the second mass 2 may be in the range of 0.12 mm to 4 mm and the outer radius R5 may be about 0.2 mm to 6 mm. The second mass 2 completely surrounds the first mass 1.

The two masses are mechanically connected by four Z-shaped coupling elements 4, 5, 6, 7. All of them are identical. The following description, therefore, only refers to the coupling element 4.

The coupling element 4 is supported on a post 8.1 (anchor point) of the substrate. The post 8.1 acts as a dot-like anchor for the coupling element 4. It supports the coupling element 4 at a certain distance above the substrate and in the centre of the coupling element 4. A first end 4.1 of the coupling element 4 is fixed to the inner mass 1 and a second end 4.2 is fixed to the outer mass 2. When the inner mass 1 is displaced clockwise from its still-position, the coupling element 4 is bent and transfers a momentum to the outer mass 2, which rotates the outer mass 2 counter-clockwise. This means that the two masses are mechanically coupled to perform anti-phase in-plane vibrations.

Because the coupling element is fixed on the post 8.1 it has also the function of flexibly suspending the masses 1, 2. So the masses can perform a vibrational movement around the centre C of the two masses 1, 2. The two ends 4.1, 4.2 of the coupling element 4 are like springs, allowing the masses 1, 2 to perform in-plane rotations and an out-of-plane swinging.

The Z-shaped coupling element 4 is a bent beam with a length L that is longer than the radial space 9.1 between the masses (L > R4 - R1). The length of each one part (between the post 8.1 and the connection to the inner and outer mass 1, 2, respectively, may be 1 - 1.5 times the radial extension of the radial space 9.1. Therefore, it is possible to adapt the resilience of the arms of the Z-shaped coupling element in a sufficiently broad range so as to control the amplitudes of the masses 1, 2 in the x-y-plane and out of the x-y-plane. The two ends 4.1, 4.2 may have the same or different shapes and lengths and the anchor post 8.1 may be displaced out of the centre of the Z-shaped coupling element 4. The cross-section of the coupling element is preferably constant along the length of the bent beam. However, it may also vary to make one of the arms stiffer than the other one.

For each mass 1, 2 there are four activation electrode structures A11+, A11-, A12+, A12-for the first mass 1, and A21+, A21-, A22+, A22- for the second mass 2. Their position is symmetrical with respect to the x- and y-axis. In the present embodiment the activation electrode structures A12+, A12- and A22+, A22- are aligned along the x-axis while the  other activation electrode structures are aligned along the y-axis. The activation electrode structures A1 1+, A11-, A12+, A12- of the inner mass 1 are arranged at the outer periphery of the inner mass 1, namely in the radial range between R1 and R2. And the activation electrode structures A21+, A21-, A22+, A22- of the outer mass 2 are arranged at the inner periphery of the ring-shaped outer mass 2, namely in the radial range between R3 and R4. (It is also possible to consider the activation electrodes for the external mass at the periphery outside, and the electrodes for the inner mass may be in the inner centre part.) In the azimuthal direction the activation electrode structures are between the four free areas 9.1, 9.2, 9.3, 9.4. Each activation electrode structure may e.g. occupy an azimuthal range of 50-70°, while the remaining 40-20° are taken by the free areas 9.1, 9.2, 9.3, 9.4. Between the activation electrode structures A11+, A11-, A12+, A12- of the inner mass 1 and the activation electrode structures A21+, A21-, A22+, A22- of the outer mass 2 there is a small radial gap 10 corresponding to the difference between R2 and R3.

The activation electrode structure may have a comb-like constitution as known in the prior art (not shown in the Figures). They generate the anti-phase vibration of the masses 1, 2 in the x-y-plane.

On each mass 1, 2 there are four sensing electrodes, S 11 +, S 11-, S 12+, S12- on the inner mass 1 and S21+, S21-, S22+, S22- on the outer mass 2. Each of them may occupy a quarter of the surface of the respective mass 1, 2. They are electrically isolated from each other by small radially oriented gaps 11.1, ... 11.4 and 12.1, ... 12.4. In the present embodiment the gaps 11.1, ... 11.4 of the inner mass 1 and the gaps 12.1, ... 12.4 of the outer mass 2 are in line with each other. So the sensing electrodes, which are occupying the azimuthal area between the gaps 12.1, ..., 12.4 are in line with each other. To be clear, the sensing electrodes S11+ and S21+ are in line with each other on the positive branch of the y-axis. The sensing electrodes S11- and S21- are positioned mirror symmetrically to the sensing electrodes S11+, S21+ on the negative branch of the y-axis. In an analogous manner, the sensing electrodes S12+ and S22+ are in line with each other on the positive branch of the x-axis and the sensing electrodes S 12- and S22- are in line with each other on the negative branch of the x-axis.

Each of the sensing electrodes on the masses 1, 2 has a mating electrode on a fixed carrier element (not shown) so as to form an electrical capacity that varies depending on the deviation of the masses from their still position.

The detection circuit is connected to the sensing electrodes for detecting the out-of-plane swinging movement of the masses 1, 2 by calculating the following differential signals:

The activation electrode structure and the circuit are not shown in detail. It is well known to the person skilled in the art (see e.g. US 6,062,082, US 5,377,544, WO 2007/003501 for activation electrode structures and WO 2005/066584, for the circuitry).

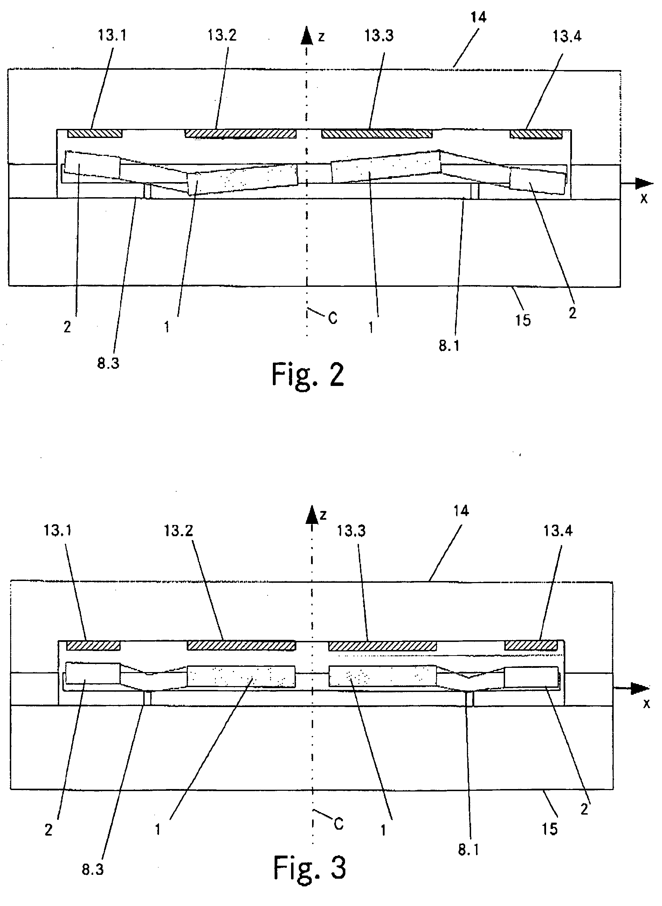

Fig. 2 schematically shows a cross-section of the device and in particular of the out-of-plane amplitudes when the device is subjected to rotation about the x-axis. Because of the anti-phase movement of the masses 1, 2 the out-of-plane amplitude of the inner mass 1 is opposite to the out-of-plane amplitude of the outer mass 2.

Fig. 2 also shows the mating electrodes 13.1, ..., 13.4, which are provided in the cap element 14 of the device and which cooperate with the sensing electrodes. The device is implemented in MEMS technology and comprises a substrate 15 and a MEMS-layer 16 between the substrate 15 and the cap element 14. The masses 1, 2 and the coupling elements 4, 5, 6, 7 are machined in the MEMS layer 16. The vibrating masses 1, 2 are encapsulated in a cavity formed between the cap element 14 and the substrate 16.

Fig. 3 schematically shows the out-of-plane amplitudes when the device is subjected to a linear acceleration along the z-axis. Both masses 1, 2 are shifting in z-direction. The corresponding changes in the sensing signals are neutralized by the differential detection according to the invention.

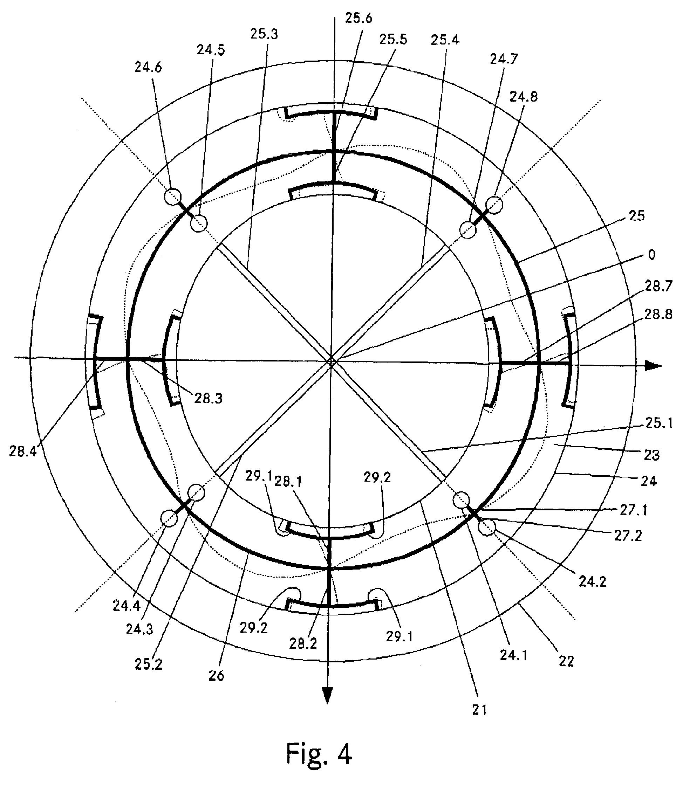

Fig. 4 shows a coupling structure that strongly supports anti-phase vibrations of the two masses 21, 22. Between the outer periphery of the inner mass 21 and the inner periphery of the ring-shaped outer mass 22 there is a ring-shaped free area 23. In this free area 23 there are e.g. 8 anchor points, 4 of them 24.1, 24.3, 24.5, 24.7 being arranged on an inner virtual circle around centre C and the other 4 of them 24.2, 24.4, 24.6, 24.8 being arranged on an outer virtual circle around centre C. The 8 anchor points form 4 anchor points pairs 24.1/24.2, 24.3/24.4, 24.5/24.6, 24.7/24.8. Each of said anchor point pair is in line with a gap 25.1,... 25.4 running on a radial from the centre C and separating the sensor electrodes on the inner mass 21 from each other.

A flexible coupling ring 26, which is concentric with the inner and the outer mass 21, 22, is placed in between the inner anchor points 24.1, 24.3, 24.5, 24.7 and the outer anchor points 24.2, 24.4, 24.6, 24.8. The coupling ring 26 is supported at a distance from the anchor points 24.1, ... 24.8 and at the same time above the substrate of the device by short radial arms 27.1, ... 27.8, the length L of the radial arms being smaller than half of (or preferably smaller than a quarter of) the radial extension of the free area 23 (see distance in Fig. 1: L < (R4 - R 1)/2).

In the middle between two neighbouring pairs of anchor points 24.1/24.2 and 24.3/24.4 there are two radial beams 28.1, 28.2 for connecting the outer and the inner mass respectively to the coupling ring 26. There are three similar radial beam structures 28.3/28.4, 28.5/28.6, 28.7/28.8 azimuthally displaced by 90° with respect to the first radial beam structure 28.1/28.2.

Whereas the radial beams 28.1, 28.2 may be straight and directly connected to the masses 21, 22, the present embodiment shows a different solution. The radial beam 27.1 has at its inner end a prong with two arms 29.1, 29.2 that are oriented transversely to the radial beam 28.1 and that are connected to the outer periphery of the ring-shaped mass 21 at a lateral distance from the virtual intersection of the axis of the radial beam 28.1 and the periphery of the mass 21. The radial beam 28.1 and the arms 29.1, 29.2 form a Y-shaped connection between the coupling ring 26 and the inner mass 21. In a similar way the outer mass 22 is connected to the coupling ring 26. As can be seen from Fig. 4 there are four Y-shaped connections to the coupling ring for each mass 21, 22.

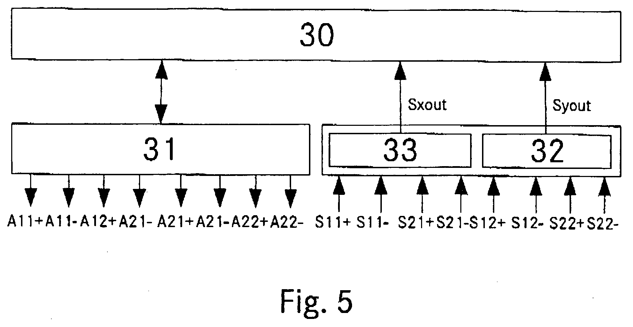

Fig. 5 schematically shows a control circuit 30 controlling an activation signal generator 31 which is connected to the activation electrodes A11+, A11-, A21+, A21-, A12+, A21-, A22+, A22-. A detection circuit is electrically connected to the sensing electrodes S11+, S11-, S21+, S21-, S12+, S21-, S22+, S22-. The detection circuit 32 comprises a calculator 33 for calculating the differential signal according to the formula:

$$Sx_{out} = (\{S21+\} - \mu\{S11+\}) - (\{S21-\} - \mu\{S11-\})$$

$$Sy_{out} = (\{S22+\} - \mu\{S12+\}) - (\{S22-\} - \mu\{S12-\})$$

The invention is not limited to the embodiments shown above. It may be an additional feature to provide a part of each sensing electrode for a quadratic compensation electrode. Such an additional electrode may be used to inject a signal that is proportional to the activation amplitude.

It is possible to use the detection scheme of the invention for just one axis. In such a simplified structure only two sensing electrodes are needed. They are diametrically opposed to each other with respect to the center axis C of the vibrating mass. They may also occupy more area than just a quarter of the top face of the mass.

It is to be noted that the signal

$$S\_3 = \{S21+\} + \{S11+\} + \{S21-\} + \{S11-\} + \{S22+\} + \{S12+\} + \{S22-\} + \{S12-\}$$

represents the linear acceleration along the z-axis ($Sz_{out}$). This signal may be evaluated and outputted.

A good geometric symmetry of the masses and supports with respect to the central axis and to the x- and y-axis of the masses makes sure that imbalance of the swinging masses is avoided.

Preferably, the design of the masses and the coupling elements is such that the vibrational frequencies of the masses is substantially higher (i.e. more than double) than the frequency of any environmental disturbing signal. This facilitates the gyro operation. A typical activation frequency higher than the highest mechanical environment perturbation frequency may be at least 3 KHz. A preferred frequency range is 3 - 12 KHz. For the sensing frequency a frequency shift of 5 to 10% from the activation frequency may be used.

In summary, the invention provides a technical solution to minimize the environmental influence on a Coriolis rotation detection device.

**Claims**

1. A method for detecting an output signal of a resonator micro-electronic gyro, preferably a micro-electromechanical system (MEMS) gyro, comprising the steps of:

   a) activating a vibrational in-plane movement of a first and a second resonator mass (1, 2) by activating means, wherein the resonator masses are suspended for rotational vibration,
   b) providing an anti-phase vibration of the first and second vibrating mass (1, 2) by at least one mechanical coupling element (4, 5, 6, 7) flexibly connecting the first and the second resonator mass (1, 2) for anti-phase vibration,
   c) detecting at least two positive sensing electrode signals {S21+}, {S11+} and at least two negative sensing electrode signals {S21-}, {S11-} of at least two positive and two negative sensing electrodes of the two resonator masses (1, 2), respectively, for detecting an out-of-plane movement of the masses,
   d) determining at least one output signal $Sx_{out}$ by differential detection of said signals on the basis of the following formula:

   $$Sx_{out} = (\{S21+\} - \mu\{S11+\}) - (\{S21-\} - \mu\{S11-\}),$$

   wherein

   {S21+}, {S21-} = sensing electrode signals of the positive and negative detection electrode of the second mass, respectively;
   {S11+}, {S11-} = sensing electrode signals of the positive and negative detection electrode of the first mass, respectively,
   $\mu$ = compensation factor.

   e) **characterized in that** the second mass (2) has the shape of a ring and the first mass (1) is concentrically suspended within the second mass.

2. The method according to claim 1, wherein for determining two output signals $Sx_{out}$, $Sy_{out}$ corresponding to Coriolis rotation in x- and y-direction the additional steps are:

a) detecting two additional positive sensing electrode signals {S22+}, {S12+} and at least two additional negative sensing electrode signals {S22-}, {S12-} of at least two additional positive and two negative sensing electrodes of the said two resonator masses (1, 2), respectively, for detecting an additional out-of-plane output movement of the masses (1, 2),

b) determining an additional output signal $Sy_{out}$ by differential detection of said additional signals on the basis of the following formula:

$$Sy_{out} = (\{S22+\} - \mu\{S12+\}) - (\{S22-\} - \mu\{S12-\}),$$

wherein

{S22+}, {S22-} = sensing electrode signals of the positive and negative detection electrode of the second mass, respectively;

(S12+), {S12-} = sensing electrode signals of the positive and negative detection electrode of the first mass, respectively,

$\mu$ = compensation factor.

3. The method of claim 1 or 2, wherein the coupling element is provided in the form of a ring-shaped elastic structure with radial beams connecting the ring-shaped structure to the two masses.

4. A resonator micro-electronic gyro, preferably a micro-electromechanical system (MEMS) gyro comprising:

a) a first and a second resonator mass {1, 2} suspended for rotational vibration, and activating means for activating a vibrational in-plane movement of the first and the second resonator mass,

b) at least one mechanical coupling element flexibly connecting the first and the second resonator mass (1, 2) for anti-phase vibration,

c) at least one positive and at least one negative sensing electrode on each resonator mass (1, 2) for detecting an out-of-plane output movement of the masses,

d) a detection circuit connected to said positive and negative sensing electrodes,

e) a calculator implemented in the detection circuit, said calculator determining the output signal by differential detection of the signals on the basis of the following formula:

$$Sx_{out} = (\{S21+\} - \mu\{S11+\}) - (\{S21-\} - \mu\{S11-\}),$$

wherein

{S21+}, {S21-} = sensing electrode signals of the positive and negative detection electrode of the second mass, respectively;

{S11+}, {S11-} = sensing electrode signals of the positive and negative detection electrode of the first mass, respectively,

$\mu$ = compensation factor.

f) **characterized in that** the second mass (2) is an outer mass that has the shape of a ring and the first mass (1) is an inner mass that is concentrically suspended within the second mass.

5. A resonator micro-electronic gyro according to claim 4, wherein for determining two output signals $Sx_{out}$, $Sy_{out}$ corresponding to Coriolis rotation in x- and y-direction there is

a) least one additional positive and at least one additional negative sensing electrode on each resonator mass for detecting an additional out-of-plane movement of the masses,

b) at least one additional detection circuit determines an additional output signal by differential detection of the signals on the basis of the following formula:

$$Sy_{out} = (\{S22+\} - \mu\{S12+\}) - (\{S22-\} - \mu\{S12-\}),$$

wherein

{S22+}, {S22-} = sensing electrode signals of the positive and negative detection electrode of the second mass, respectively;

{S12+}, {S12-} = sensing electrode signals of the positive and negative detection electrode of the first mass, respectively,

$\mu$ = compensation factor.

6. A resonator micro-electronic gyro according to claim 5, wherein the first mass has a circular shape.

7. A resonator micro-electronic gyro according to one of claims 4 - 6, wherein each of the at least one coupling element is fixed on an anchor and is suspending the two masses.

8. A resonator micro-electronic gyro according to claim 7, wherein each of the at least one anchor is arranged in a free space between the two masses and is supporting the coupling element in a middle area.

9. A resonator micro-electronic gyro according to claim 8, wherein the at least one coupling element is Z-shaped.

10. A resonator micro-electronic gyro according to claim 8, wherein the coupling element has the form of a ring-shaped elastic structure with radial beams connecting the ring-shaped structure to the two masses.

11. A resonator micro-electronic gyro according to claim 10, wherein the ring-shaped structure is fixed on at least four anchors angularly shifted with respect to the beams

12. A resonator micro-electronic gyro according to one of claims 4 - 11, wherein - when viewed from a centre of the masses-there are sectors and wherein the positive sensing electrodes of the two masses are in the same sector.

13. A resonator micro-electronic gyro according to one of claims 4 - 12, wherein the geometry of the resonator masses (1, 2) is selected in such a way that an actuated vibration frequency of the inner and the outer mass (1, 2) is the same.

14. A resonator micro-electronic gyro according to one of claims 4 - 13, wherein the inner mass is suspended in such a way that it has a higher output amplitude than the outer mass.

15. A resonator micro-electronic gyro according to one of claims 4 - 14, wherein the inner mass is suspended in such a way that it has a higher vibration-amplitude than the outer mass.

**Patentansprüche**

1. Verfahren zum Detektieren eines Ausgangssignals eines mikroelektronischen Resonatorgyroskops, vorzugsweise eines Gyroskops eines mikroelektromechanischen Systems (MEMS), aufweisend die folgenden Schritte:

a) Aktivieren einer Vibrationsbewegung einer ersten und einer zweiten Resonatormasse (1, 2) in einer Ebene durch Aktivierungsmittel, wobei die Resonatormassen für eine Drehvibration aufgehängt sind,

b) Vorsehen einer Anti-Phasenvibration der ersten und zweiten vibrierenden Masse (1, 2) durch mindestens ein mechanisches Kopplungselement (4, 5, 6, 7), das die erste und die zweite Resonatormasse (1, 2) für eine Anti-Phasenvibration flexibel verbindet,

c) Detektieren von mindestens zwei positiven Erfassungselektrodensignalen {S21+}, {S11+} und von mindestens zwei negativen Erfassungselektrodensignalen {S21-}, {S11-} von mindestens zwei positiven bzw. zwei negativen Erfassungselektroden der zwei Resonatormassen (1, 2), zum Detektieren einer Bewegung der Massen quer zur Ebene,

d) Bestimmen mindestens eines Ausgangssignals $Sx_{out}$ durch Differentialerkennung der Signale auf der Basis der folgenden Formel:

$$Sx_{out} = (\{S21+\} - \mu\{S11+\}) - (\{S21-\} - \mu\{S11-\}),$$

wobei

{S21+}, {S21-} = Erfassungselektrodensignale der positiven bzw. negativen Detektionselektrode der zweiten Masse;
{S11+}, {S11-} = Erfassungselektrodensignale der positiven bzw. negativen Detektionselektrode der ersten Masse,
$\mu$ = Ausgleichsfaktor,

e) **dadurch gekennzeichnet, dass** die zweite Masse (2) die Form eines Rings hat und die erste Masse (1) konzentrisch in der zweiten Masse aufgehängt ist.

2. Verfahren nach Anspruch 1, wobei zum Bestimmen von zwei Ausgangssignalen $Sx_{out}$, $Sy_{out}$ entsprechend der Coriolis-Rotation in x- und y-Richtung die zusätzlichen Schritte wie folgt sind:

a) Detektieren von zwei zusätzlichen positiven Erfassungselektrodensignalen {S22+}, {S12+} und mindestens zwei zusätzlichen negativen Erfassungselektrodensignalen {S22-}, {S12-} von mindestens zwei zusätzlichen positiven bzw. zwei negativen Erfassungselektroden der zwei Resonatormassen (1, 2) zum Detektieren einer zusätzlichen Ausgangsbewegung der Massen (1, 2) quer zur Ebene,
b) Bestimmen eines zusätzlichen Ausgangssignals $Sy_{out}$ durch differentielle Erfassung der zusätzlichen Signale auf der Basis der folgenden Formel:

$$Sy_{out} = (\{S22+\} - \mu\{S12+\}) - (\{S22-\} - \mu\{S12-\}),$$

wobei

{S22+}, {S22-} = Erfassungselektrodensignale der positiven bzw. negativen Detektionselektrode der zweiten Masse;
{S12+}, {S12-} = Erfassungselektrodensignale der positiven bzw. negativen Detektionselektrode der ersten Masse;
$\mu$ = Ausgleichsfaktor,

3. Verfahren nach Anspruch 1 oder 2, wobei das Kopplungselement in der Form einer ringförmigen elastischen Struktur mit radialen Balken vorgesehen ist, die die ringförmige Struktur mit den zwei Massen verbindet.

4. Mikroelektronisches Resonatorgyroskop, vorzugsweise ein mikroelektromechanisches System (MEMS) Gyroskop, aufweisend:

a) eine erste und eine zweite Resonatormasse (1, 2), die zur Drehvibration aufgehängt sind, und ein Aktivierungsmittel zum Aktivieren einer Vibrationsbewegung der ersten und der zweiten Resonatormasse in einer Ebene,
b) mindestens ein mechanisches Kopplungselement, das die erste und die zweite Resonatormasse (1, 2) zur Anti-Phasenvibration flexibel verbindet,
c) mindestens eine positive und mindestens eine negative Erfassungselektrode an jeder Resonatormasse (1, 2) zum Detektieren einer Ausgangsbewegung der Massen quer zur Ebene,
d) eine Detektionsschaltung, die an die positiven und negativen Erfassungselektroden angeschlossen ist,
e) einen Rechner, der in der Detektionsschaltung implementiert ist, wobei der Rechner das Ausgangssignal durch differentielle Erfassung der Signale auf der Basis der folgenden Formel bestimmt:

$$Sx_{out} = (\{S21+\} - \mu\{S11+\}) - (\{S21-\} - \mu\{S11-\}),$$

wobei

{S21+}, {S21-} = Erfassungselektrodensignale der positiven bzw. negativen Detektionselektrode der zweiten Masse;
{S11+}, {S11-} = Erfassungselektrodensignale der positiven bzw. negativen Detektionselektrode der ersten Masse,
$\mu$ = Ausgleichsfaktor,

f) **dadurch gekennzeichnet, dass** die zweite Masse (2) eine äußere Masse ist, die die Form eines Rings hat, und die erste Masse (1) eine innere Masse ist, die konzentrisch in der zweiten Masse aufgehängt ist.

5. Mikroelektronisches Resonatorgyroskop nach Anspruch 4, wobei zum Bestimmen von zwei Ausgangssignalen $Sx_{out}$, $Sy_{out}$, entsprechend einer Coriolis-Drehung in x- und y-Richtung

a) mindestens eine zusätzliche positive und mindestens eine zusätzliche negative Erfassungselektrode an jeder Resonatormasse zum Detektierten einer zusätzlichen Bewegung der Massen auf unterschiedlichen Ebenen vorhanden ist,
b) mindestens eine zusätzliche Detektionsschaltung ein zusätzliches Ausgangssignal durch Differentialerkennung der Signale auf der Basis der folgenden Formel bestimmt:

$$Sy_{out} = (\{S22+\} - \mu\{S12+\}) - (\{S22-\} - \mu\{S12-\}),$$

wobei

{S22+}, {S22-} = Erfassungselektrodensignale der positiven bzw. negativen Detektionselektrode der zweiten Masse;
{S12+}, {S12-} = Erfassungselektrodensignale der positiven bzw. negativen Detektionselektrode der ersten Masse;
$\mu$ = Ausgleichsfaktor.

6. Mikroelektronisches Resonatorgyroskop nach Anspruch 5, wobei die erste Masse eine kreisförmige Gestalt hat.

7. Mikroelektronisches Resonatorgyroskop nach einem der Ansprüche 4-6, wobei jedes von dem mindestens einen Kopplungselement an einem Anker befestigt ist und die zwei Massen aufhängt.

8. Mikroelektronisches Resonatorgyroskop nach Anspruch 7, wobei jeder von dem mindestens einen Anker in einem freien Raum zwischen den zwei Massen angeordnet ist und das Kopplungselement in einer mittleren Fläche trägt.

9. Mikroelektronisches Resonatorgyroskop nach Anspruch 8, wobei das mindestens eine Kopplungselement Z-förmig ist.

10. Mikroelektronisches Resonatorgyroskop nach Anspruch 8, wobei das Kopplungselement die Form einer ringförmigen elastischen Struktur mit radialen Balken hat, die die ringförmige Struktur mit den zwei Massen verbindet.

11. Mikroelektronisches Resonatorgyroskop nach Anspruch 10, wobei die ringförmige Struktur an mindestens vier Ankern befestigt ist, die in Bezug auf die Balken winkelig verschoben sind.

12. Mikroelektronisches Resonatorgyroskop nach einem der Ansprüche 4-11, wobei - bei Betrachtung aus einer Mitte der Massen - Sektoren vorhanden sind und wobei sich die positiven Erfassungselektroden der zwei Massen in demselben Sektor befinden.

13. Mikroelektronisches Resonatorgyroskop nach einem der Ansprüche 4-12, wobei die Geometrie der Resonatormassen (1, 2) so gewählt ist, dass eine erregte Vibrationsfrequenz der inneren und äußeren Masse(1, 2) dieselbe ist.

**14.** Mikroelektronisches Resonatorgyroskop nach einem der Ansprüche 4-13, wobei die innere Masse derart aufgehängt ist, dass sie eine höhere Ausgangsamplitude hat als die äußere Masse.

**15.** Mikroelektronisches Resonatorgyroskop nach einem der Ansprüche 4-14, wobei die innere Masse derart aufgehängt ist, dass sie eine höhere Vibrationsamplitude hat als die äußere Masse.

**Revendications**

**1.** procédé de détection d'un signal de sortie d'un gyroscope micro-électronique à résonateur, de préférence un gyroscope à microsystème électromécanique (MEMS), comportant les étapes consistant à :

a) activer un mouvement vibratoire dans le plan d'une première et d'une deuxième masse (1, 2) de résonateur par des moyens d'activation, les masses de résonateur étant suspendues en vue d'une vibration de rotation,
b) introduire une vibration en opposition de phase de la première et de la deuxième masse vibrante (1, 2) par au moins un élément (4, 5, 6, 7) de couplage mécanique reliant de façon souple la première et la deuxième masse (1, 2) de résonateur en vue d'une vibration en opposition de phase,
c) détecter au moins deux signaux {S21+}, {S11+} d'électrodes positives de détection et au moins deux signaux {S21-}, {S11-} d'électrodes négatives de détection d'au moins deux électrodes positives et deux électrodes négatives de détection des deux masses (1, 2) de résonateur, respectivement, servant à détecter un mouvement hors plan des masses,
d) déterminer au moins un signal de sortie $Sx_{out}$ par détection différentielle desdits signaux sur la base de la formule suivante ;

$$Sx_{out} = (\{S21+\} - \mu \{S11+\}) - (\{S21-\} - \mu \{S11-\}),$$

où

{S21+}, {S21-} = signaux d'électrodes de détection des électrodes positive et négative de détection de la deuxième masse, respectivement;
{S11+}, {S11-} = signaux d'électrodes de détection des électrodes positive et négative de détection de la première masse, respectivement,
$\mu$ = facteur de compensation,

e) **caractérisé en ce que** la deuxième masse (2) présente la forme d'un anneau et **en ce que** la première masse (1) est suspendue de façon concentrique à l'intérieur de la deuxième masse.

**2.** Procédé selon la revendication 1, les étapes supplémentaires pour déterminer deux signaux de sortie $Sx_{out}$, $Sy_{out}$ correspondant à la rotation de Coriolis dans la direction x et la direction y consistant à :

a) détecter deux signaux {S22+}, {S12+} d'électrodes positives supplémentaires de détection et au moins deux signaux {S22-}, {S12-} d'électrodes négatives supplémentaires de détection d'au moins deux électrodes positives et deux électrodes négatives supplémentaires de détection desdites deux masses (1, 2) de résonateur, respectivement, servant à détecter en sortie un mouvement supplémentaire hors plan des masses (1, 2),
b) déterminer un signal supplémentaire de sortie $Sy_{out}$ par détection différentielle desdits signaux supplémentaires sur la base de la formule suivante :

$$Sy_{out} = (\{S22+\} - \mu \{S12+\}) - (\{S22-\} - \mu \{S12-\}),$$

où

{S22+}, {S22-} = signaux d'électrodes de détection des électrodes positive et négative de détection de la deuxième masse, respectivement;

{S12+}, {S12-} = signaux d'électrodes de détection des électrodes positive et négative de détection de la première masse, respectivement,

$\mu$ = facteur de compensation.

3. Procédé selon la revendication 1 ou 2, l'élément de couplage se présentant sous la forme d'une structure élastique en forme d'anneau dotée de branches radiales reliant la structure en forme d'anneau aux deux masses.

4. Gyroscope micro-électronique à résonateur, de préférence un gyroscope à microsystème électromécanique (MEMS), comportant :

a) une première et une deuxième masse (1, 2) de résonateur suspendues en vue d'une vibration de rotation, et des moyens d'activation servant à activer un mouvement vibratoire dans le plan de la première et de la deuxième masse de résonateur,

b) au moins un élément de couplage mécanique reliant de façon souple la première et la deuxième masse (1, 2) de résonateur en vue d'une vibration en opposition de phase,

c) au moins une électrode positive et au moins une électrode négative de détection sur chaque masse (1, 2) de résonateur, servant à détecter en sortie un mouvement hors plan des masses,

d) un circuit de détection relié auxdites électrodes positives et négatives de détection,

e) un calculateur mis en oeuvre dans le circuit de détection, ledit calculateur déterminant le signal de sortie par détection différentielle des signaux sur la base de la formule suivante :

$$Sx_{out} = (\{S21+\} - \mu \{S11+\}) - (\{S21-\} - \mu \{S11-\}),$$

où

{S21+}, {S21-} = signaux d'électrodes de détection des électrodes positive et négative de détection de la deuxième masse, respectivement;

{S11+}, {S11-} = signaux d'électrodes de détection des électrodes positive et négative de détection de la première masse, respectivement,

$\mu$ = facteur de compensation,

f) **caractérisé en ce que** la deuxième masse (2) est une masse extérieure qui présente la forme d'un anneau et la première masse (1) est une masse intérieure qui est suspendue de façon concentrique à l'intérieur de la deuxième masse.

5. Gyroscope micro-électronique à résonateur selon la revendication 4, comportant, pour déterminer deux signaux de sortie $Sx_{out}$, $Sy_{out}$ correspondant à la rotation de Coriolis dans la direction x et la direction y :

a) au moins une électrode positive supplémentaire et au moins une électrode négative supplémentaire de détection sur chaque masse de résonateur, servant à détecter un mouvement hors plan supplémentaire des masses,

b) au moins un circuit supplémentaire de détection qui détermine un signal supplémentaire de sortie par détection différentielle des signaux sur la base de la formule suivante :

$$Sy_{out} = (\{S22+\} - \mu \{S12+\}) - (\{S22-\} - \mu \{S12-\}),$$

où

{S22+}, {S22-} = signaux d'électrodes de détection des électrodes positive et négative de détection de la deuxième masse, respectivement;

{S12+}, {S12-} = signaux d'électrodes de détection des électrodes positive et négative de détection de la première masse, respectivement,

$\mu$ = facteur de compensation.

6. Gyroscope micro-électronique à résonateur selon la revendication 5, la première masse présentant une forme circulaire.

7. Gyroscope micro-électronique à résonateur selon l'une des revendications 4 à 6, ledit ou chacun desdits éléments de couplage étant fixé sur une ancre et suspendant les deux masses.

8. Gyroscope micro-électronique à résonateur selon la revendication 7, ladite ou chacune desdites ancres étant disposée dans un espace libre entre les deux masses et soutenant l'élément de couplage dans une zone médiane.

9. Gyroscope micro-électronique à résonateur selon la revendication 8, ledit ou lesdits éléments de couplage étant en forme de Z.

10. Gyroscope micro-électronique à résonateur selon la revendication 8, l'élément de couplage présentant la forme d'une structure élastique en forme d'anneau dotée de branches radiales reliant la structure en forme d'anneau aux deux masses.

11. Gyroscope micro-électronique à résonateur selon la revendication 10, la structure en forme d'anneau étant fixée sur au moins quatre ancres décalées angulairement par rapport aux branches.

12. Gyroscope micro-électronique à résonateur selon l'une des revendications 4 à 11, comportant - vu d'un centre des masses - des secteurs et les électrodes positives de détection des deux masses se trouvant dans le même secteur.

13. Gyroscope micro-électronique à résonateur selon l'une des revendications 4 à 12, la géométrie des masses (1, 2) de résonateur étant choisie de telle façon qu'une fréquence de vibration forcée des masses intérieure et extérieure (1, 2) étant la même.

14. Gyroscope micro-électronique à résonateur selon l'une des revendications 4 à 13, la masse intérieure étant suspendue de façon à présenter une amplitude de sortie supérieure à celle de la masse extérieure.

15. Gyroscope micro-électronique à résonateur selon l'une des revendications 4 à 14, la masse intérieure étant suspendue de façon à présenter une amplitude de vibration supérieure à celle de la masse extérieure.

Fig. 1

Fig. 2

Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5329815 A
- US 5025346 A
- EP 0623807 A
- US 5377544 A
- US 7624494 B, Challoner
- US 6062082 A, Guenther
- US 6629460 B, Challoner
- US 20040211257 A
- WO 2007003501 A
- WO 2005066584 A